# EUROPÄISCHE PATENTSCHRIFT

(11) **EP 0 672 640 B1**
(45) Veröffentlichungstag und Bekanntmachung des Hinweises auf die Patenterteilung: **02.07.1997**
(21) Anmeldenummer: 95103449.5
(22) Anmeldetag: 10.03.1995
(51) Int. Cl.: C04B 41/64

(54) **Verfahren zur Behandlung von mineralischen Baustoffen**
Process for treating inorganic building materials
Procédé de traitement de matériaux de construction inorganiques

(30) Priorität: 17.03.1994 DE 4409141
(43) Veröffentlichungstag der Anmeldung: 20.09.1995
(73) Patentinhaber: Degussa Aktiengesellschaft, 60311 Frankfurt (DE); Remmers Bauchemie GmbH, D-49624 Löningen (DE)
(72) Erfinder: Panster, Peter, Dr., D-63517 Rodenbach (DE); Wieland, Stefan, Dr., D-63069 Offenbach (DE); Göbel, Thomas, Dr., D-63457 Hanau (DE); Brandes, Christian, D-30165 Hannover (DE); Werner, Ute, D-49624 Löningen (DE); Zinsmeister, Klaus, Dr., D-49624 Löningen (DE); Langen, Marion, D-49757 Werlte (DE)

(56) Entgegenhaltungen:
- EP-A- 0 385 108
- EP-A- 0 672 726
- DE-A- 4 142 129
- GB-A- 773 175
- US-A- 4 267 213

## Beschreibung

Die Erfindung betrifft ein Verfahren zur Behandlung von mineralischen Baustoffen mit Imprägniermittel, die insbesondere zur Verhinderung von Salzablagerungen bzw. Salzausblühungen geeignet sind.

Mineralische Baustoffe, sowohl synthetischer als auch natürlicher Herkunft werden aus optischen Gründen und/oder zum Schutz gegen Witterungseinflüsse häufig mit Schutzanstrichen versehen. Solche Schutzanstriche sind geeignet, die Einwirkung von Feuchtigkeit wie auch von Schadstoffen von außen bis zu einem gewissen Grade auszuschließen. Andererseits entsteht auf diese Weise ein Versiegelungseffekt, der feuchtigkeitsbedingte Umwandlungen im Inneren des Steins durch von unten oder von der Rückseite her eindringende Feuchtigkeit oder darin enthaltene Restfeuchte und dadurch bedingte Schäden nicht nur nicht unterbindet, sondern geradezu begünstigt. Bekannt und gefürchtet sind unterhalb der Beschichtung sich ausbildende Salzablagerungen, die die Beschichtung anheben und zum Abplatzen bringen und binnen kurzer Zeit deren Schutzwirkung und optisches Aussehen zunichte machen. Verantwortlich für solche Schäden sind einerseits mit der Feuchtigkeit in den Stein eindringende Salze, beispielsweise über Luftschadstoffe oder salzhaltiges Grundwasser, sowie andererseits durch Feuchtigkeit aus dem Stein gelöste wie auch durch chemische Umwandlungen freigesetzte Salze, die gleichermaßen an den Außenflächen des Steins ausblühen und die Beschichtung zum Abplatzen bringen.

Aus dem Stand der Technik ist eine Vielzahl von Anmeldungen bekannt, die die Imprägnierung von mineralischen Materialien mit siliziumorganischen Verbindungen betreffen. So z. B. Alkyltrialkoxysilane und deren Ankondensationsprodukte enthaltende wäßrige Emulsionen (DE-PS 27 51 714), gepufferte Silanemulsionen (EP-A 0 340 816) oder sogenannte Mikroemulsionen, die Polysiloxane enthalten (EP-A 0 279 623). Aus der EP-A-672 726 sind wäßrige Lösungen bekannt, die siliziumhaltige Ionenaustauscher enthalten. Gegen Salzausblühungen beständige Imprägnierungen wurden bislang jedoch noch nicht gefunden.

Der Erfindung liegt daher die Aufgabe zugrunde, ein Verfahren zu finden, um synthetische oder natürliche mineralische Baumaterialien gegen Salzausblühungen und die häufig darauf folgenden Absprengungen von Beschichtungen zu schützen. Bei diesen Salzen handelt es sich im allgemeinen um Alkalichloride, -sulfate oder Nitrate.

Diese Aufgabe wird durch die Verwendung von Sulfonatgruppen-haltigen Organosilanen beider Behandlung mineralischer Baustoffe synthetischer und natürlicher Herkunft in Form von wäßrigen Suspensionen oder Lösungen gelöst, die dadurch gekennzeichnet sind, daß sie wenigstens einen siliziumhaltigen Ionenaustauscher der allgemeinen Formel

[(YO)₃Si(CH₂)ₓ]ₙEX (I)

oder
ein Oligomeres dieser Verbindungen enthalten das durch eine Kondensation von SiOH-Gruppen zu 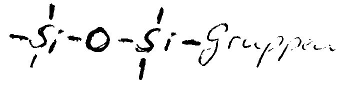 entstanden ist,
worin
- x:: 1 bis 12, bevorzugt 2 bis 6, insbesondere 3,
- n:: 1 bis 3, in Abhängigkeit von E
- Y:: H; Na, K, Mg, Ca,Ba
- E:: eine Kationen oder Anionen austauschende Gruppe, insbesondere SO₃⁻ bzw. Ammonium, und
- X:: H⁺ oder ein Alkali- oder Erdalkalikation bzw. OH⁻ oder ein Anion
bedeuten, in einer Menge von 0,1 bis 70 Gew.-%, insbesondere von 5 bis 30 Gew.-%, bezogen auf die Gesamtmenge der Lösung oder Suspension, wobei die Behandlung ein- oder mehrstufig, gegebenenfalls kombiniert mit einer Behandlung mit hydrolysierbare Silane - und/oder Siloxane - enthaltenden wäßrigen oder organischen Emulsionen oder Lösungen, erfolgt.

Eine einstufige Behandlung mit einer Emulsion oder Lösung der siliziumhaltigen Ionenaustauscher gemäß Formel (I) bedeutet, daß entweder
- nur eine Anionenaustauscher-haltige oder
- nur eine Kationenaustauscher-haltige oder
- eine Anionenaustauscher- plus Kationenaustauscher-haltige
Suspension bzw. Lösung verwendet wird.

Unter einer mehrstufigen Behandlung versteht man
- das mehrfache Aufbringen einer Anionenaustauscher- oder einer Kationenaustauscher-haltigen Suspension bzw. Lösung oder
- das hintereinander geschaltete Aufbringen einer Anionenaustauscher- und einer Kationenaustauscher-haltigen Suspension bzw. Lösung oder
- das mehrfache Aufbringen einer Anionenaustauscher- plus Kationenaustauscher-haltigen Suspension bzw. Lösung.

Im Falle einer mehrstufigen Verfahrensweise schließt sich jeder Behandlung üblicherweise eine Trocknungsphase an, in der eine Abreaktion des siliziumhaltigen Ionenaustauschers mit dem Baustoff und ein Kondensationsprozeß, der mit der Ausbildung einer Polysiloxanmatrix verbunden ist, stattfindet. Wenn es sich bei dem zu behandelnden Baustoff aber um ein hochporöses Material handelt, kann diese Trocknungsphase sehr kurz gehalten oder gegebenenfalls darauf verzichtet werden.

Bei einer mehrstufigen Verfahrensweise, bei der eine Behandlung mit einer Kationenaustauscher-haltigen und mit einer Anionenaustauscher-haltigen Suspension bzw. Lösung erfolgt, ist die Reihenfolge prinzipiell frei wählbar. Besonders bewährt hat sich jedoch die primäre Aufbringung der Anionenaustauscher-haltigen Suspension bzw. Lösung.

In den erfindungsgemäß verwendeten Ionenaustauschern hat x vorzugsweise die Bedeutung 2 bis 6, insbesondere sind gemeint die Gruppen Ethylen, Trimethylen oder Tetramethylen. Davon besonders bevorzugt ist Trimethylen.

Bevorzugt handelt es sich bei der Kationen-austauschenden Gruppe EX um die Gruppe SO₃H oder ein Salz davon, insbesondere ein Alkali oder Erdalkalimetallsalz.

Verbindungen gemäß Formel I sind ebenso wie die Oligomeren, denen man allgemein z. B. die Formel 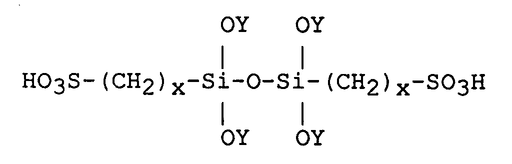 zuschreibt, aus dem Stand der Technik als Ionenaustauscher bekannt, siehe z. B. DE-OS 41 42 129.

Es zeigt sich, daß die erfindungsgemäßen Grundier- und Imprägniermittel nicht nur die Salzausblühungen verhindern bzw. weitgehend unterdrücken, sondern auch eine Wirkung entfalten, die über die ionenaustauschenden Eigenschaften hinausgehen.

Als besonders vorteilhaft hat sich die kombinierte Anwendung von anionischen und kationischen Ionenaustauschern gemäß der allgemeinen Formel I bzw. deren Gemischen erwiesen, wobei bevorzugt gleiche molare Mengen an Anionen- und Kationenaustauschern eingesetzt werden, ohne daß geringfügige Abweichungen davon wesentlich wären.

Besonders bevorzugt ist hier das Calziumsalz

[(YO)₃Si(CH₂)₃SO₃⁻]₂Ca²⁺.

Als Anionenaustauscher sind bevorzugt Verbindungen mit einer Anmoniumgruppe gemäß der Formel

[(YO)₃Si(CH₂)₃]ₙN⁺R₄₋ₙOH⁻,

worin R eine geradkettige verzweigte oder cyclische Alkylgruppe mit 1 bis 10 Kohlenstoffatomen oder eine entsprechende Aralkylgruppe ist. Die Alkylgruppen einer Ammoniumgruppe können gleich oder verschieden sein.

R entspricht vorteilhaft der Methylgruppe, so daß der bevorzugte Anionenaustauscher mit Y = Na der Formel

[(ONa)₃Si(CH₂)₃]₃N⁺(CH₃)OH⁻

entspricht, einer Verbindung, die im alkalischen Milieu ohne weiteres in wäßriger Lösung beständig ist. Zweckmäßigerweise hat die wäßrige Imprägnier-Lösung dabei einen pH-Wert von größer 7.

Sie werden hergestellt durch Umsetzung der festen, aus den DE-OS 31 20 195 und 38 00 564 bekannten Verbindungen mit NaOH, wie es auch in der parallelen Anmeldung p 44 09 140.0 beschrieben wird.

Neben den monomeren Verbindungen können aber auch in Abhängigkeit von der Konzentration in den wäßrigen Mitteln oligomere Strukturen der Verbindungen gemäß Formel I vorliegen, die durch Kondensation von SiOH-Gruppen zu Si-O-Si-Gruppen entstehen.

Die erfindungsgemäßen wäßrigen Grundier- und Imprägniermittel enthalten den siliziumhaltigen Ionenaustauscher zweckmäßigerweise in einer Menge von 0,1 bis 70 Gew.-%, bevorzugt 5 bis 30 Gew.-%. Diese Lösungen oder Suspensionen können bei Bedarf weiter mit Wasser verdünnt oder aber aufkonzentriert werden, sind aber regelmäßig in dieser Konzentration direkt einsetzbar. Die Mittel trägt man in für Imprägnierungen und Grundierungen üblicher Weise auf die zu behandelnde Fläche auf und läßt sie einziehen, gegebenenfalls in wiederholter Anwendung, wenn eine größere Eindringtiefe und Ionenaustauscherpräsenz im zu behandelnden Material erzielt werden soll.

Besonders vorteilhafte Effekte sind erzielbar, wenn die Behandlung der mineralischen Baustoffe nach dem erfindungsgemäßen Verfahren gemäß Ansprüchen 1 - 9 mit einer Behandlung mit hydrophobierend wirkenden organischen oder wäßrigen Lösungen oder Emulsionen, wie sie im Prinzip aus dem Stand der Technik zum Imprägnieren von Baustoffen bekannt sind, kombiniert. Diese Behandlung schließt sich bevorzugt an die Behandlung mit der Ionenaustauscher--haltigen Lösung oder Suspension in einem separaten Schritt an.

Übliche, hydrophobierend wirkende Lösungen oder Emulsionen enthalten z. B. hydrolisierbare Alkylalkoxysilane in einem Anteil von 1 bis 60 Gew.-Teilen der Gesamtmenge sowohl in monomer als auch kondensierter oder teilkondensierter Form.

Bei der Alkylgruppe handelt es sich im allgemeinen um C₁-C₂₀ Alkylreste, während die Alkoxygruppen C₁-C₆-Alkoxyresten entspricht.

Häufig verwendet werden auch Kieselsäureester in der angegebenen Menge.

Anstelle oder in Kombination mit den Alkylalkoxysilanen oder Kieselsäureestern sind auch die für diese Anwendung an sich bekannten alkoxyfunktionellen Siliconharze (DE-OS 33 23 908) oder Organoalkoxypolysiloxane (EP-A 0 015 366) oder aus der EP-A 0 279 623 bekannte Mikroemulsionen geeignet, mit den erfindungsgemäß verwendeten Ionenaustauschern vermischt und eingesetzt zu werden.

Grundsätzlich ist es auch möglich, diese hydrophobierend wirkenden Lösungen oder Emulsionen mit der Lösung oder Suspension des (der) siliziumhaltigen Ionenaustauschers vor der Anwendung zu mischen und somit die ionenaustauscherhaltige Imprägnierung und die zusätzlich hydrophobierend wirkende Imprägnierung in einem Schritt aufzubringen.

Voraussetzung hierfür ist jedoch, daß vor allem aufgrund des pH-Wertes der ionenaustauscherhaltigen Lösung oder Suspension keine spontane Reaktion, z. B. in Form einer Polykondensation, mit der hydrophobierend wirkenden Lösung oder Emulsion stattfindet. Deshalb können dabei auch zusätzlich Puffersubstanzen und beim Auftreten eines 2-Phasensystems auch Emulgatoren zugesetzt werden.

Das erfindungsgemäße Verfahren zum Imprägnieren und Grundieren von mineralischen Baustoffen, das naturgemäß bei Umgebungstemperatur abläuft, d. h. im allgemeinen zwischen 10 und 45° C, bereitet den Untergrund hervorragend für den eigentlichen Schutzanstrich z. B. mit hochmolekularem Siliconharz vor, wie es sich u. a. auch in der Funcosil® Pulverfarbe befindet.

Natürlich sind auch andere Produkte z. B. Siliconemulsionsfarben für den Anstrich geeignet.

Die Erfindung wird durch die beiliegenden Versuchsergebnisse bevorzugter Ausführungsformen näher erläutert.

### Beispielteil

Einsatz von Ionenaustauschern auf salzbelasteten mineralischen Untergründen.

Zur Beurteilung der Leistungsfähigkeit der Ionenaustauscher wurden vergleichende Untersuchungen an Probekörpern vorgenommen, die nur mit herkömmlichen Grundiermitteln grundiert und Farben beschichtet waren. Zur Quantifizierung der Effekte wurden die kapillare Wasseraufnahme in Anlehnung an DIN 52617 sowie die Haftzugfestigkeit der Beschichtung in Anlehnung an ISO 4624-1978 (E) herangezogen.

### 1. Materialien

### 1.1 Untergründe

Die Laborversuche erfolgten mit zwei unterschiedlichen Natursteinuntergründen

### Oberkirchner Sandstein

Farbe: hellgelb-hellgrau
Bestandteile: überwiegend Quarz
Kornbindung: kieselig gebunden
Porosität: 17 - 19 Vol.%
Wasseraufnahmekoeffizient des unbehandelten Steins nach DIN 52617: 1,75 kg/²√h

### Baumberger Sandstein

Farbe: hellgrau-hellgelb
Bestandteile: überwiegend Kalzit, Quarz-(Sand-) Anteil gering
Kornbindung: kalkig gebunden
Porosität: 15 - 18 Vol.%
Wasseraufnahmekoeffizient des unbehandelten Steins nach DIN 52617: 1,50 kg/m²√h

### 1.2 Imprägnier- und Beschichtungsstoffe

### Anionenaustauscher

Formel: (CH₃)N[CH₂)₃Si(OH)₃]₃^{⊕}OH ⁻
System: wäßrige Siloxanlösung
Aktive Gruppe: Methyltrialkylammonium
Siloxangehalt: 0,5 M
Lösung ist 1,0 M an NaOH , pH ca. 14

### Kationenaustauscher

Formel: (HO)₃Si(CH₂)₃SO₃ ⁻ H^{⊕}
System: wäßrige Siloxanlösung
Aktive Gruppe: Sulfonsäure
Siloxangehalt: 0,5 M ,pH ca. 0,3

### Imprägniergrund

Geeignet sind als Materialien die üblichen zur Imprägnierung geeigneten und bekannten niedermolekularen Alkylalkoxysilane, die in Form Lösungsmittel (Alkohol)-haltiger Lösungen oder in Form wäßriger Emulsionen im Handel sind.

Hier wurde eingesetzt Funcosil^{®} Imprägniergrund, eine reaktive oligomere Siloxanlösung zur wasserabweisenden Grundierung mineralischer Baustoffe.

### Siliconharzemulsionsfarbe

Verwendbar sind die allgemeinen bekannten Farben auf der Basis von hoch molekularem Siliconharz und einem organischen Bindemittel.

Eingesetzt wurde in den Beispielen Funcosil^{®} Pulverfarbe auf der Basis eines hoch molekularen Siliconharzes, das in Wasser dispergiert und dann aufgetragen wird.

### 2. Herstellung von Prüfkörpern

Von den unter Abschnitt 1.1 genannten Natursteinen wurden Prüfkörper in den Abmessungen 7 x 6 x 2 cm mit eine Steinsäge zurechtgesägt, bei 105° C zur Gewichtskonstanz getrocknet und anschließend gewogen. Daraufhin winden sie in konzentrierte Salzlösungen (jeweils NaCl und Na₂SO₄) über einen Zeitraum von 24 Stunden getränkt und erneut bei 105° C getrocknet. Die Salzbelastung wurde nach der Trocknung durch Wägung ermittelt und in Masse-% umgerechnet. Falls notwendig, wurden vor dem Auftrag der Imprägnier- und Beschichtungsstoffe außen an den Prüfkörpern locker anheftende Salzkrusten mit einem Spachtel abgekratzt.

Die Applikation der unter 1.2 genannten Substanzen erfolgte unter Laborbedingungen, d. h. bei einer Temperatur von 20 - 22° C und einer relativen Luftfeuchte von 30 - 50 %.

Pro Gesteinsvarietät und Art der Salzbelastung wurden mindestens 8 Prüfkörper einseitig beschichtet, davon waren mindestens 4 mit Ionenaustauschern behandelt. Sämtliche Substanzen wurden mittels eines Flachpinsels aufgetragen. Die Auftragsmengen wurden abgemessen und bezogen auf die Prüfkörperfläche in l/m² umgerechnet.

Die Applikation verlief im einzelnen in der folgend geschilderten Reihenfolge ab:

### a) mit Ionenaustauschern behandelte Prüfkörper

- Applikation des Anionenaustauschers, je nach Saugfähigkeit des Untergrunds ca. 0,2 - 0,3 l/m²
- 3 Stunden Trockenzeit
- Applikation des Kationenaustauschers, je nach Saugfähigkeit des Untergrunds ca. 0,2 - 0,3 l/m²
- 3 Stunden Trockenzeit
- Applikation des Funcosil-Imprägniergrundes, je nach Saugfähigkeit des Untergrunds ca. 0,2 - 0,4 l/m²
- 24 Stunden Trockenzeit
- erster Anstrich mit Funcosil-Pulverfarbe, Auftrag ca. 0,15 l/m²
- 24 Stunden Trockenzeit
- zweiter Anstrich mit Funcosil-Pulverfarbe, Auftrag ca. 0,15 l/m²

### b) ohne Ionenaustauscher behandelte Prüfkörper

- Applikation des Funcosil-Imprägniergrundes, je nach Saugfähigkeit des Untergrunds ca. 0,4 - 0,6 l/m²
- 24 Stunden Trockenzeit
- erster Anstrich mit Funcosil-Pulverfarbe, ca. 0,15 l/m²
- 24 Stunden Trockenzeit
- zweiter Anstrich mit Funcosil-Pulverfarbe, ca. 0,15 l/m²

Vor Versuchsbeginn wurden die beschichteten Prüfkörper eine Woche in Raumluft (20 - 22° C, 30 - 50 % rel. Luftfeuchte) gelagert und anschließend gewogen.

### 3. Versuchsdurchführung und Ergebnisse

### 3.1 Kapillare Wasseraufnahme in Anlehnung an DIN 52617

Die kapillare Wasseraufnahme wurde in Anlehnung an DIN 52617 unter Laborbedingungen ermittelt (20 - 22° C, 30 - 50 % rel. Luftfeuchte). Zur seitlichen Abdichtung der Prüfkörper wurde Epoxidharz verwendet. Der Saugversuch wurde durch Lagerung der Prüfkörper auf einem wassergesättigten PE-Schwamm durchgeführt.

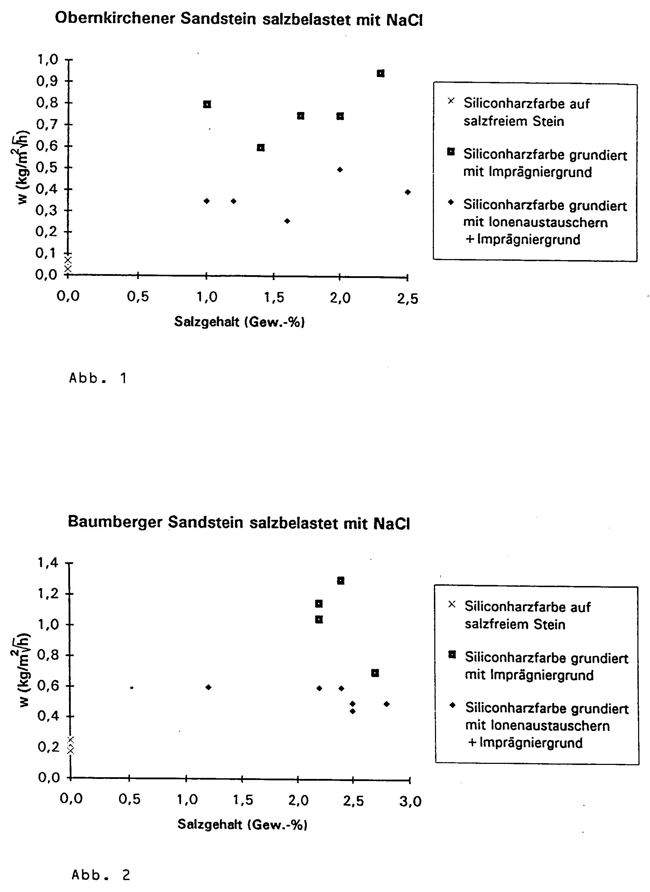

Die Berechnung der Wasseraufnahmekoeffizienten (w-Werte) erfolgte entsprechend DIN 52617 Abs. 8 mit der Angabe in kg/m²√h. Die Ergebnisse der salzbelasteten Prüfkörper mit und ohne Ionenaustauscher-Behandlung sind in Abhängigkeit von der jeweiligen Salzbelastung in den Abb. 1, 2 und 5, 6 zu ersehen. Zusätzlich dargestellt sind die w-Werte von nicht salzbelasteten Proben beschichtet mit Siliconharzemulsionsfarbe.

### 3.2 Haftzugfestigkeiten nach ISO 4624-1978 (E)

Zur Untersuchung der Haftzugfestigkeiten wurden die gleichen Proben herangezogen, die zuvor unter Abs. 3.1 verwendet wurden. Nach Beendigung des kapillaren Saugversuchs wurden die Proben bei 50° C bis zur Gewichtskonstanz getrocknet.

Die Prüfungen erfolgten mit einem Haftzugprüfgerät der Firma Herion, Typ HP 850 in Anlehnung an ISO 4624-1978 (E), wobei Stempel mit quadratischer Grundfläche (5 x 5 cm) mittels eines 2-Komponentenklebstoffes auf die Beschichtung und die Probekörper mit der Unterseite auf eine Stahlplatte geklebt wurden. Die Kraftanstiegs-Geschwindigkeit während der Prüfung betrug 100 N/s.

Die gemessene Zugkraft in KN wurde durch die Prüfstempelfläche dividiert, woraus sich die Einheit N/mm² ergibt.

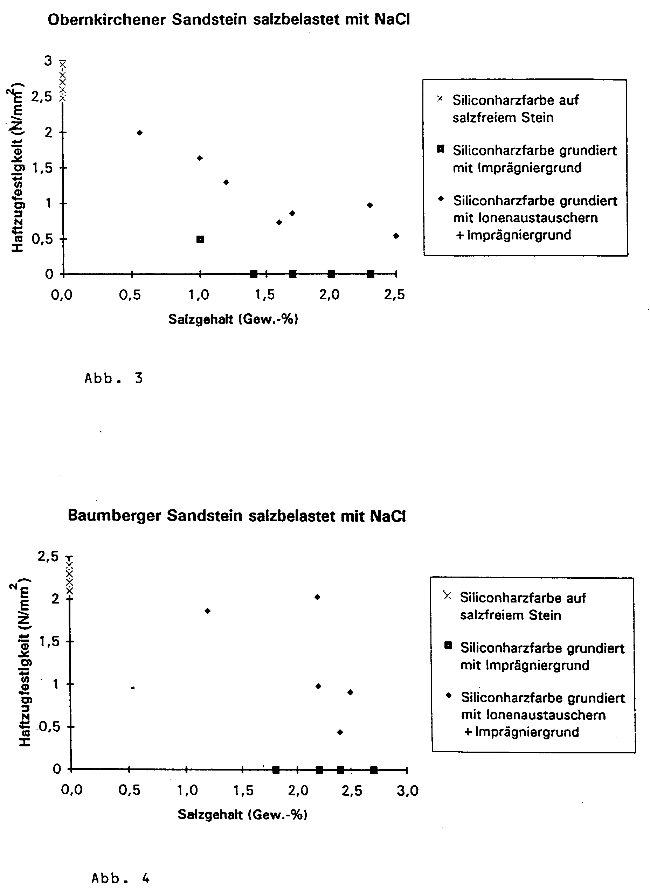

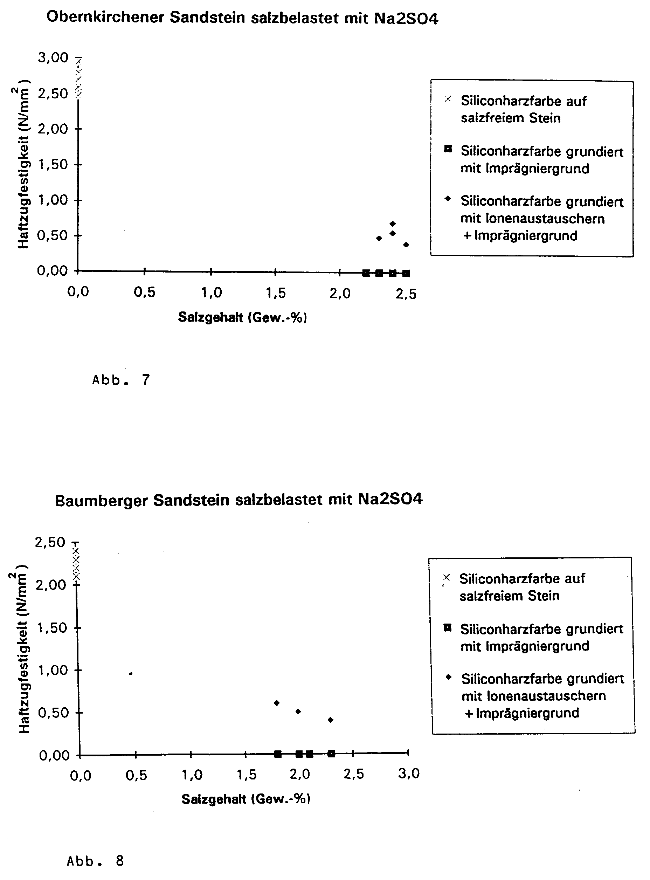

Die Ergebnisse der salzbelasteten Prüfkörper mit und ohne Ionenaustauscher-Behandlung sind in Abhängigkeit von der jeweiligen Salzbelastung in den Abb. 3, 4 und den Abb. 7, 8 zu ersehen. Zusätzlich dargestellt sind Haftzugfestigkeiten von nicht salzbelasteten Proben beschichtet mit Siliconharzemulsionsfarbe. Das bei der Prüfung entstandene Bruchbild ist wie folgt charakterisiert: Grundsätzlich wurden bei allen salzbelasteten Proben Adhäsionsbrüche an der Grenzfläche Beschichtung/Untergrund festgestellt. Bei den nicht salzbelasteten Vergleichsproben fiel das Bruchbild uneinheitlich aus: Teilweise wurden Kohäsionsbrüche innerhalb der Beschichtung oder im Untergrund sowie Adhäsionsbrüche an der Grenzfläche Beschichtung/Untergrund beobachtet.

### 4. Diskussion der Untersuchungsergebnisse

### 4.1 NaCl-belastete Prüfkörper

Die kapillare Wasseraufnahme (Abb. 1, 2) konnte durch Verwendung der Ionenaustauscher reduziert werden. Sie lag beim Oberkirchner Sandstein zwischen 0,2 - 0,8 kg/m²√h, im Vergleich dazu betrug die Wasseraufnahme ohne Ionenaustauscher 0,6 - 1,0 kg/m²√h. Beim Baumburger Sandstein konnten die w-Werte von 0,6 - 1,3 kg/m²√h durch Verwendung der Ionenaustauscher auf 0,4 - 0,6 kg/m²√h gesenkt werden. Die nicht salzbelasteten Proben zeigten im Vergleich zu den salzbelasteten deutlich niedrigere Werte: Beim Oberkirchner Sandstein 0,04 - 0,08 kg/m²√h und beim Baumberger Sandstein 0,18 - 0,23 kg/m²√h.

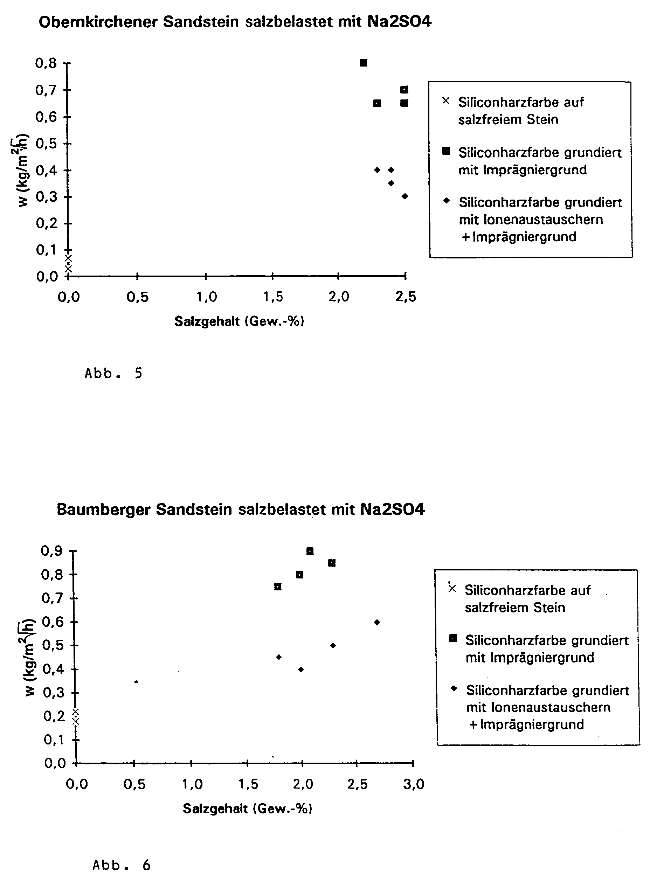

Die Haftzugfestigkeiten (Abb. 3, 4) fielen auf den salzbelasteten Untergründen ohne Ionenaustauscher sehr ungünstig aus: Die Beschichtungen blätterten nach dem kapillaren Saugversuch oftmals ab und erscheinen daher mit 0 N/mm² im Diagramm. Die mit Ionenaustauschern behandelten Proben zeigten in Anbetracht der Salzbelastung verhältnismäßig gute Werte. Sie lagen beim Oberkirchner Sandstein zwischen 0,5 - 2,0 N/mm² und beim Baumberger Sandstein im Bereich von 0 - 2,0 N/mm². Die nicht salzbelasteten Proben wiesen Werte von 2,5 - 2,9 N/mm² beim Oberkirchner Sandstein und 2,1 - 2,4 N/mm² beim Baumberger Sandstein auf.

### 5.2 Na₂SO₄-belastete Prüfkörper

Die Ergebnisse fielen tendenziell ähnlich wie die Resultate der NaCl-belasteten Prüfkörper aus. Die kapillare Wasseraufnahme wurde auf beiden Untergründen durch den Einsatz der Ionenaustauscher vermindert (Abb. 5,6 ). Die Haftzugfestigkeiten (Abb. 7, 8) konnten insoweit verbessert werden, als daß die Beschichtungen nach dem kapillaren Saugversuch noch am Untergrund fest hafteten, während ohne Ionenaustauscher die Beschichtungen stets abblätterten.

Dennoch sind die gemessenen Werte (0,4 - 0,6 N/mm² beim Oberkirchner Sandstein bzw. 0,3 - 0,7 N/mm² beim Baumberger Sandstein) der mit Ionenaustauschern behandelten Proben relativ niedrig, was vermutlich auf die bei der Hydratisierung des Na₂SO₄ auftretende Volumenausdehnung und damit verbundene Sprengwirkung zurückzuführen ist.

## Patentansprüche

1. Verwendung von Sulfonatgruppen-haltigen Organosiliziumverbindungen in Form wäßriger Lösungen oder Suspensionen zur Verhinderung von Salzablagerungen beziehungsweise -ausblühungen bei mineralischen Baustoffen synthetischer und natürlicher Herkunft,
**dadurch gekennzeichnet**,
daß die Lösungen oder Suspensionen wenigstens einen siliziumhaltigen Ionenaustauscher der allgemeinen Formel
[(YO)₃Si(CH₂)ₓ]ₙEX (I)
oder ein Oligomeres dieser Verbindungen enthalten, das durch Kondensation von SiOH-Gruppen zu Si-O-Si-Gruppen entstanden ist,
worin
x: 1 bis 12
n: 1 bis 3, in Abhängigkeit von E
Y: H, Na, K, Mg, Ca, Ba
E: eine Kationen oder Anionen austauschende Gruppe und
X: H⁺ oder ein Alkali- oder Erdalkalikation bzw. OH⁻ oder ein Anion
bedeuten,
in einer Menge von 0,1 bis 70 Gew.-%, insbesondere von 10 bis 30 Gew.-%, bezogen auf die Gesamtmenge der Lösung oder Suspension, wobei die Anwendung ein- oder mehrstufig, gegebenenfalls kombiniert mit einer Behandlung mit hydrolysierbare Silane - und/oder Siloxane - enthaltenden organischen oder wäßrigen Lösungen bzw. Emulsionen, erfolgt.

2. Verwendung gemäß Anspruch 1,
**dadurch gekennzeichnet**,
daß EX = SO₃H oder ein Salz davon und n = 1 ist.

3. Verwendung gemäß Anspruch 1,
**dadurch gekennzeichnet**,
daß EX = SO₃ ⁻ 1/2Ca ²⁺ entspricht.

4. Verwendung gemäß Anspruch 1,
**dadurch gekennzeichnet**,
daß EX = NR^{⊕}₄₋ₙOH ⁻ entspricht, worin R jeweils eine geradkettige, verzweigte oder cyclische Alkylgruppe mit 1 bis 10 Kohlenstoffatomen bedeutet.

5. Verwendung gemäß Anspruch 4,
**dadurch gekennzeichnet**,
daß der Ionenaustauscher die Formel
[(ONa)₃Si(CH₂)₃]₃N⁺(CH₃)OH⁻
hat.

6. Verwendung gemäß einem der Ansprüche 4 bis 5,
**dadurch gekennzeichnet**,
daß die Lösung oder Suspension auf einen pH-Wert im Bereich von größer 7 eingestellt ist.

7. Verwendung gemäß den Ansprüchen 1 und 6,
**dadurch gekennzeichnet**,
daß man nebeneinander Kationen und Anionen austauschende siliziumhaltige Ionenaustauscher gemäß Formel I bzw. Oligomere dieser Verbindung getrennt oder als Mischung verwendet.

8. Verwendung gemäß Anspruch 7,
**dadurch gekennzeichnet**,
daß man als Kationenaustauscher [(OH)₃Si(CH₂)₃]SO₃⁻1/2Ca₂⁺ oder [(OH)₃Si(CH₂)₃]SO₃H und als Anionenaustauscher [(ONa)₃Si(CH₂)₃]₃N⁺(CH₃)OH⁻ einsetzt.

9. Verwendung gemäß Anspruch 7,
**dadurch gekennzeichnet**,
daß man die Kationen- und die Anionenaustauscher in gleichen molar äquivalenten Mengen verwendet.

10. Verwendung gemäß einem oder mehreren der Ansprüche 1 bis 9,
**dadurch gekennzeichnet**,
daß man im Anschluß an die Behandlung mit der ionenaustauscherhaltigen Lösung oder Suspension eine Behandlung mit einer hydrophobierend wirkenden organischen oder wäßrigen Lösung bzw. Emulsion durchführt.

11. Verwendung gemäß einem oder mehreren der Ansprüche 1 bis 10,
**dadurch gekennzeichnet**,
daß man nach dem Auftragen der ionenaustauscherhaltigen Lösung und der hydrophobierend wirkenden Schicht ein Deckanstrich aufträgt.

## Claims

1. Use of organosilicon compounds containing sulphonate groups and in the form of aqueous solutions or suspensions for the prevention of saline deposits and of efflorescence of salts in mineral building materials of synthetic and natural origin,
characterised in that the solutions or suspensions contain at least one silicon-containing ion exchanger of the general formula
[(YO)₃Si(CH₂)ₓ]ₙEX (I)
or an oligomer of this compound, which has been formed by condensation of SiOH groups to form Si-O-Si- groups,
wherein
x signifies 1 to 12,
n signifies 1 to 3, depending on E
Y signifies H, Na, K, Mg, Ca, Ba
E signifies a cation-exchanging or anion-exchanging group and
X signifies H⁺ or an alkali cation or alkaline earth cation or OH⁻ or an anion,
in a quantity of from 0.1 to 70% by weight, in particular from 10 to 30% by weight, referred to the total quantity of the solution or suspension, with the application taking place in a single stage or in multiple stages, optionally combined with a treatment with organic or aqueous emulsions or solutions containing hydrolysable silanes and/or siloxanes.

2. Use according to claim 1,
characterised in that
EX denotes SO₃H or a salt thereof and n equals 1.

3. Use according to claim 1,
characterised in that
EX corresponds to SO₃⁻ 1/2Ca²⁺.

4. Use according to claim 1,
characterised in that
EX corresponds to NR^{⊕}₄₋ₙOH⁻, wherein R signifies in each case a straight chain, branched or cyclic alkyl group having 1 to 10 carbon atoms.

5. Use according to claim 4,
characterised in that
the ion exchanger has the formula
[(ONa)₃Si(CH₂)₃]₃N⁺(CH₃)OH⁻,

6. Use according to one of claims 4 and 5,
characterised in that
the solution or suspension is adjusted to a pH value in the range of greater than 7.

7. Use according to claims 1 and 6,
characterised in that
silicon-containing ion exchangers exchanging cations and anions corresponding to formula (I) and oligomers of these compounds are used simultaneously, separated or as a mixture.

8. Use according to claim 7,
characterised in that
the cation exchanger used is [(OH)₃Si(CH₂)₃]SO₃⁻ 1/2Ca₂⁺ or [(OH)₃Si(CH₂)₃]SO₃H and the anion exchanger used is [(ONa)₃Si(CH₂)₃]₃N⁺(CH₃)OH⁻.

9. Use according to claim 7,
characterised in that
the cation exchangers and the anion exchangers are used in equal molar equivalent quantities.

10. Use according to one or more of claims 1 to 9,
characterised in that
subsequent to the treatment with the solution or suspension containing ion exchangers, a treatment using a water-repellent organic or aqueous solution or emulsion is carried out.

11. Use according to one or more of claims 1 to 10,
characterised in that
a topcoat is applied following the application of the solution containing the ion exchangers and the water-repellent layer.

## Revendications

1. Utilisation de composés organosilicium contenant des groupes sulfonates sous forme de solutions ou suspensions aqueuses pour empêcher des dépôts de sels ou des efflorescences de sels le cas échéant sur des matériaux de construction d'origine synthétique ou naturelle,
caractérisée en ce que
les solutions ou suspensions contiennent au moins un échangeur d'ions contenant du silicium de formule générale I,
[(YO)₃Si(CH₂)ₓ]ₙEX (I)
un oligomère de ces composés, qu'on forme par condensation, de groupes SiOH en groupes -Si-O-Si-, où
x : représente 1 à 12, de préférence 2 à 6, surtout 3,
n : représente 1 à 3 en fonction de E
Y : représente H, Na, K, Mg, Ca, Ba
E : représente un groupe échangeant des cations ou des anions, notamment SO₃⁻ ou un ammonium, et,
X : représente H⁺ ou un cation alcalin ou alcalino-terreux ou OH⁻ ou un anion,
en une quantité de 0,1 à 70 % en poids, notamment de 5 à 30 % en poids par rapport à la quantité totale de la solution ou de la suspension, où l'utilisation a lieu en une ou plusieurs étapes, le cas échéant en combinaison avec un traitement par des silanes et/ou des siloxanes hydrolysables contenus dans des solutions ou émulsions organiques ou aqueuses.

2. Utilisation selon la revendication 1,
caractérisée en ce qu'
EX = SO₃H ou un de ses sels et n = 1.

3. Utilisation selon la revendication 1,
caractérisée en ce qu'
EX représente SO₃-1/2Ca ²⁺.

4. Utilisation selon la revendication 1,
caractérisée en ce que
EX représente NH^{⊕}₄₋ₙ OH⁻, où R représente respectivement un groupe alkyle à chaîne droite, ramifiée ou cyclique avec 1 à 10 atomes de carbone.

5. Utilisation selon la revendication 4,
caractérisée en ce que
l'échangeur d'ions a la formule [(ONa)₃Si(CH₂)₃]₃N⁺(CH₃)OH⁻.

6. Utilisation selon l'une des revendications 4 à 5,
caractérisée en ce que
la solution ou la suspension ont un pH ajusté dans le domaine supérieur à 7.

7. Utilisation selon les revendications 1 et 6,
caractérisée en ce qu'
on utilise côte à côte des échangeurs d'ions contenant du silicium échangeant les cations et les anions selon la formule I ou des oligomères de ce composé séparément ou sous forme de mélange.

8. Utilisation selon la revendication 7,
caractérisée en ce qu'
on utilise comme échangeur cationique, [(OH)₃Si(CH₂)₃]SO₃⁻1/2Ca₂⁺ ou [(OH)₃Si(CH₂)₃]SO₃H ou et comme échangeur anionique [(ONa)₃Si(CH₂)₃]₃N⁺(CH₃)OH⁻.

9. Utilisation selon la revendication 7,
caractérisée en ce qu'
on utilise les échangeurs cationiques et anioniques en quantités équivalentes molaires identiques.

10. Utilisation selon l'une ou plusieurs des revendications 1 à 9,
caractérisée en ce qu'
en connexion au traitement avec la solution ou la suspension contenant des échangeurs ioniques on réalise un traitement avec une solution ou suspension aqueuse ou organique à effet hydrophobe.

11. Utilisation selon l'une ou plusieurs des revendications 1 à 10,
caractérisée en ce qu'
après le dépôt de la solution contenant les échangeurs d'ions et de la couche à effet hydrophobe, on dépose une peinture de couverture.
